# EUROPEAN PATENT APPLICATION

(11) **EP 4 712 606 A1**
(43) Date of publication of application: **18.03.2026**
(21) Application number: 23936865.7
(22) Date of filing: 12.05.2023
(51) Int. Cl.: H04W 64/00

(54) **COMMUNICATION METHOD, APPARATUS, DEVICE AND SYSTEM, AND COMPUTER READABLE STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Hersina, Günter
(86) International application number: PCT/CN2023/094025
(87) International publication number: WO 2024/234172

(57) **Abstract**

The present disclosure relates to a communication method, apparatus, device and system, and a computer readable storage medium. The method comprises: a terminal indicates, to a network device, a capability of the terminal itself of performing a GNSS measurement in a connected state. According to the solution of the present disclosure, the network device can accurately acquire the GNSS measurement capability of the terminal, thus executing a proper operation, to configure a GNSS measurement gap for the terminal, so that the GNSS measurement accuracy is improved.

## Description

### FIELD

The present disclosure relates to the field of wireless communication technologies, and in particular, to a communication method, an apparatus, a device, a system, and a computer-readable storage medium.

### BACKGROUND

Global navigation satellite system (GNSS) modules and cellular modules are usually embedded in terminals, such as wearable devices, mobile phones, laptop computers, Internet of Things (IoT) devices, etc. The GNSS module calculates the position of the terminal by receiving signals from multiple satellite systems, that is, performs positioning of the terminal. After knowing its own position information, the terminal can perform uplink synchronization compensation.

Usually, before performing a GNSS measurement (or GNSS positioning (such as GNSS position fix)), the terminal needs to send time information required for GNSS measurement (such as position fix time) to the network, so that the network can configure a suitable measurement gap for the terminal.

### SUMMARY

In view of this, since some terminals support GNSS measurement in a connected state, while some terminals do not support GNSS measurement in a connected state, how the terminal sends GNSS measurement time information to the network in this case is an urgent problem to be solved.

Embodiments of the present disclosure provide a communication method and apparatus, device, system, and computer-readable storage medium.

According to a first aspect of embodiments of the present disclosure, a communication method is proposed, performed by a terminal. The method includes: indicating a capability of the terminal to perform GNSS measurement in a connected state.

According to a second aspect of embodiments of the present disclosure, a communication method is proposed, performed by a network device. The method includes: obtaining a capability, indicated by a terminal, of the terminal to perform GNSS measurement in a connected state.

According to a third aspect of embodiments of the present disclosure, a communication method is proposed, performed by a communication system. The method includes: a terminal indicating, to a network device, a capability of the terminal to perform GNSS measurement in a connected state; and the network device determining that the terminal does not support performing a GNSS measurement in a connected state, and performing at least one of: not sending first configuration information, where the first configuration information is used to instruct the terminal to send GNSS measurement time information; or not sending second information, where the second information includes at least one of: a GNSS measurement trigger instruction or second configuration information, where the second configuration information is used to instruct the terminal to perform an autonomous GNSS measurement.

According to a fourth aspect of embodiments of the present disclosure, a communication apparatus is proposed. The apparatus includes: a sending module, configured to indicate a capability of the terminal to perform GNSS measurement in a connected state.

According to a fifth aspect of embodiments of the present disclosure, a communication apparatus is proposed. The apparatus includes: a receiving module, configured to obtain a capability, indicated by a terminal, of the terminal to perform GNSS measurement in a connected state; and a processing module, configured to configure a measurement gap for the terminal based on the capability of the terminal to perform GNSS measurement in a connected state.

According to a sixth aspect of embodiments of the present disclosure, a communication device is proposed. The communication device includes: one or more processors; one or more memories for storing instructions; where the processors are configured to invoke the instructions to cause the communication device to perform the communication method according to any one of the first aspect and the second aspect.

According to a seventh aspect of embodiments of the present disclosure, a communication system is proposed. The communication system includes: a terminal and a network device, where the terminal is configured to implement the communication method according to the first aspect, and the network device is configured to implement the communication method according to the second aspect.

According to an eighth aspect of embodiments of the present disclosure, a computer-readable storage medium is proposed. The computer-readable storage medium stores instructions that, when run on a communication device, cause the communication device to perform the communication method according to any one of the first aspect and the second aspect.

Through the embodiments of the present disclosure, the accuracy of terminal GNSS measurement is improved.

### BRIEF DESCRIPTION OF THE DRAWINGS

To more clearly illustrate the technical solutions in the embodiments of the present disclosure, the drawings required for describing the embodiments are introduced below. The following drawings are only some embodiments of the present disclosure and do not specifically limit the protection scope of the present disclosure.
FIG. 1 is a schematic architectural diagram of a communication system according to an embodiment of the present disclosure.
FIG. 2 is a schematic diagram of a scenario where uplink and downlink are aligned on the access network device side according to an embodiment of the present disclosure.
FIG. 3 is a schematic diagram of a scenario where uplink and downlink are not aligned on the access network device side according to an embodiment of the present disclosure.
FIG. 4 is a first schematic flowchart of a communication method performed by a terminal side according to an embodiment of the present disclosure.
FIG. 5 is a second schematic flowchart of a communication method performed by a terminal side according to an embodiment of the present disclosure.
FIG. 6 is a third schematic flowchart of a communication method performed by a terminal side according to an embodiment of the present disclosure.
FIG. 7 is a schematic flowchart of a communication method performed by a network device side according to an embodiment of the present disclosure.
FIG. 8 is a schematic structural diagram of a first communication apparatus according to an embodiment of the present disclosure.
FIG. 9 is a schematic structural diagram of a second communication apparatus according to an embodiment of the present disclosure.
FIG. 10 is a schematic structural diagram of a communication device according to an embodiment of the present disclosure.
FIG. 11 is a schematic structural diagram of a terminal according to an embodiment of the present disclosure.
FIG. 12 is a schematic structural diagram of a network device according to an embodiment of the present disclosure.

### DETAILED DESCRIPTION

The present disclosure provides a communication method, an apparatus, a device, a system, and a computer-readable storage medium.

In a first aspect, an embodiment of the present disclosure proposes a communication method, performed by a terminal. The method includes: indicating a capability of the terminal to perform GNSS measurement in a connected state.

In the above embodiment, the terminal indicates to the network device its capability to perform GNSS measurement in a connected state, that is, the terminal reports to the network device whether it supports performing a GNSS measurement in a connected state. In this way, the network device can accurately obtain the GNSS measurement capability of the terminal, thereby performing appropriate operations, configuring a GNSS measurement gap for the terminal, and thus improving the accuracy of GNSS measurement.

In combination with the first aspect, in some embodiments, the indicating the capability of the terminal to perform GNSS measurement in a connected state includes: sending first information, where the first information is used to indicate the capability of the terminal to perform GNSS measurement in a connected state.

In the above embodiment, the terminal indicates whether it supports performing a GNSS measurement in a connected state by sending the first information to the network device. In this way, the network device can accurately obtain the GNSS measurement capability of the terminal according to the indication of the first information, thereby performing appropriate operations, configuring a GNSS measurement gap for the terminal, and thus improving the accuracy of GNSS measurement.

In combination with the first aspect, in some embodiments, the first information is capability indication information of the terminal, or the first information is GNSS measurement assistance information.

In the above embodiment, the first information may be capability indication information of the terminal or GNSS measurement assistance information. Then, the terminal can indicate whether it supports performing a GNSS measurement in a connected state by sending the capability indication information or the GNSS measurement assistance information to the network device. In this way, the network device can accurately obtain the GNSS measurement capability of the terminal according to the indication of the capability indication information or the GNSS measurement assistance information, thereby performing appropriate operations, configuring a GNSS measurement gap for the terminal, and thus improving the accuracy of GNSS measurement.

In combination with the first aspect, in some embodiments, the first information is capability indication information of the terminal; a value of the capability indication information of the terminal is a first value, and the capability indication information of the terminal is used to indicate that the terminal supports performing a GNSS measurement in a connected state; or a value of the capability indication information of the terminal is a second value, and the capability indication information of the terminal is used to indicate that the terminal does not support performing a GNSS measurement in a connected state.

In the above embodiment, the capability indication information of the terminal may have different values to represent different GNSS measurement capabilities of the terminal. When the value of the capability indication information of the terminal is the first value, it indicates that the terminal supports performing a GNSS measurement in a connected state; when the value of the capability indication information of the terminal is the second value, it indicates that the terminal does not support performing a GNSS measurement in a connected state. In this way, the network device accurately learns the GNSS measurement capability of the terminal through the different values of the capability indication information of the terminal, thereby performing appropriate operations, configuring a GNSS measurement gap for the terminal, and thus improving the accuracy of GNSS measurement.

In combination with the first aspect, in some embodiments, the first information is capability indication information of the terminal; the sending the first information includes: sending the capability indication information of the terminal before the terminal enters the connected state; or sending the capability indication information of the terminal after the terminal enters the connected state.

In the above embodiment, the terminal may send its capability indication information to the network device before entering the connected state, or may send its capability indication information to the network device after entering the connected state. That is, the terminal is not limited by its connection state and can send the capability indication information of the terminal to the network device during the initial access phase or after entering the connected state, enabling the network device to timely and accurately learn the GNSS measurement capability of the terminal, thereby performing appropriate operations, configuring a GNSS measurement gap for the terminal, and thus improving the accuracy of GNSS measurement.

In combination with the first aspect, in some embodiments, the terminal does not support performing a GNSS measurement in the connected state, the first information is the capability indication information of the terminal, and the method further includes: not receiving first configuration information sent by a network device, where the first configuration information is used to instruct the terminal to send GNSS measurement time information.

In the above embodiment, in a case where the terminal does not support performing a GNSS measurement in the connected state, the terminal may not receive the first configuration information sent by the network device for instructing the terminal to send GNSS measurement time information, thereby reducing its own power consumption.

In combination with the first aspect, in some embodiments, the first information is GNSS measurement assistance information, a value of the GNSS measurement assistance information is set to a preset value, and the GNSS measurement assistance information is used to indicate that the terminal does not support performing a GNSS measurement in the connected state.

In the above embodiment, the GNSS measurement assistance information may have different values to represent different GNSS measurement capabilities of the terminal. When the value of the GNSS measurement assistance information is the preset value, it indicates that the terminal does not support performing a GNSS measurement in the connected state. In this way, the network device accurately learns the GNSS measurement capability of the terminal through the value of the GNSS measurement assistance information, thereby performing appropriate operations, configuring a GNSS measurement gap for the terminal, and thus improving the accuracy of GNSS measurement.

In combination with the first aspect, in some embodiments, the preset value is one of a plurality of optional values of the GNSS measurement assistance information, and the plurality of optional values at least include one preset value.

In combination with the first aspect, in some embodiments, the terminal does not support performing a GNSS measurement in the connected state, and the method further includes: receiving first configuration information sent by a network device, where the first configuration information is used to instruct the terminal to send GNSS measurement time information; and not sending the GNSS measurement time information.

In the above embodiment, the terminal indicates whether it supports performing a GNSS measurement in a connected state by whether it responds to the first configuration information to send GNSS measurement time information to the network device. In this way, the network device can accurately obtain the GNSS measurement capability of the terminal according to the indication of the terminal, thereby performing appropriate operations, configuring a GNSS measurement gap for the terminal, and thus improving the accuracy of GNSS measurement. Further, in a case where the terminal does not support performing a GNSS measurement in the connected state, the terminal may not receive the first configuration information sent by the network device for instructing the terminal to send GNSS measurement time information, thereby reducing its own power consumption.

In combination with the first aspect, in some embodiments, the terminal does not support performing a GNSS measurement in the connected state, and the method further includes: after the terminal enters the connected state, not receiving second information sent by a network device, where the second information includes at least one of: a GNSS measurement trigger instruction or second configuration information, where the second configuration information is used to instruct the terminal to perform an autonomous GNSS measurement; or not sending acknowledgement response information corresponding to the second information.

In the above embodiment, in a case where the terminal does not support performing a GNSS measurement in the connected state, the terminal may not receive or not respond to the second information sent by the network device after entering the connected state, thereby reducing its own power consumption.

In a second aspect, an embodiment of the present disclosure proposes a communication method, performed by a network device. The method includes: obtaining a capability, indicated by a terminal, of the terminal to perform GNSS measurement in a connected state.

In the above embodiment, the network device obtains the capability, indicated by the terminal, of the terminal to perform GNSS measurement in a connected state, to confirm whether the terminal supports performing a GNSS measurement in a connected state, thereby performing appropriate operations, configuring a GNSS measurement gap for the terminal, and thus improving the accuracy of terminal GNSS measurement.

In combination with the second aspect, in some embodiments, the method further includes: configuring a measurement gap for the terminal based on the capability of the terminal to perform GNSS measurement in a connected state.

In combination with the second aspect, in some embodiments, the obtaining the capability, indicated by the terminal, of the terminal to perform GNSS measurement in a connected state includes: receiving first information sent by the terminal, where the first information is used to indicate the capability of the terminal to perform GNSS measurement in a connected state.

In combination with the second aspect, in some embodiments, the first information is capability indication information of the terminal; or the first information is GNSS measurement assistance information.

In combination with the second aspect, in some embodiments, the first information is capability indication information of the terminal, a value of the capability indication information of the terminal is a first value, and the capability indication information of the terminal is used to indicate that the terminal supports performing a GNSS measurement in a connected state; or a value of the capability indication information of the terminal is a second value, and the capability indication information of the terminal is used to indicate that the terminal does not support performing a GNSS measurement in a connected state.

In combination with the second aspect, in some embodiments, the terminal does not support performing a GNSS measurement in the connected state, the first information is the capability indication information of the terminal, and the method further includes: not sending first configuration information, where the first configuration information is used to instruct the terminal to send GNSS measurement time information.

In the above embodiment, in a case where the terminal does not support performing a GNSS measurement in the connected state, the network device may not send the first configuration information for instructing the terminal to send GNSS measurement time information to the terminal, to save system resources.

In combination with the second aspect, in some embodiments, the first information is GNSS measurement assistance information, a value of the GNSS measurement assistance information is a preset value, and the GNSS measurement assistance information is used to indicate that the terminal does not support performing a GNSS measurement in the connected state.

In combination with the second aspect, in some embodiments, the preset value is one of a plurality of optional values of the GNSS measurement assistance information, and the plurality of optional values at least include one preset value.

In combination with the second aspect, in some embodiments, the obtaining the capability, indicated by the terminal, of the terminal to perform GNSS measurement in a connected state includes: sending first configuration information, where the first configuration information is used to instruct the terminal to send GNSS measurement time information; and performing one of: in a case where the GNSS measurement time information is received, determining that the terminal supports performing a GNSS measurement in the connected state; or in a case where the GNSS measurement time information is not received, determining that the terminal does not support performing a GNSS measurement in the connected state.

In combination with the second aspect, in some embodiments, the terminal does not support performing a GNSS measurement in the connected state, and the method further includes: not sending second information, where the second information includes at least one of: a GNSS measurement trigger instruction or second configuration information, where the second configuration information is used to instruct the terminal to perform an autonomous GNSS measurement.

In the above embodiment, in a case where the terminal does not support performing a GNSS measurement in the connected state, the network device may not send the second information to the terminal, to save system resources.

In a third aspect, an embodiment of the present disclosure proposes a communication method, performed by a communication system. The method includes: a terminal indicating, to a network device, a capability of the terminal to perform GNSS measurement in a connected state; and the network device determining that the terminal does not support performing a GNSS measurement in the connected state, and performing at least one of: not sending first configuration information, where the first configuration information is used to instruct the terminal to send GNSS measurement time information; or not sending second information, where the second information includes at least one of: a GNSS measurement trigger instruction or second configuration information, where the second configuration information is used to instruct the terminal to perform an autonomous GNSS measurement.

In combination with the third aspect, in some embodiments, the terminal indicating, to the network device, the capability of the terminal to perform GNSS measurement in a connected state includes: the terminal sending first information to the network device, where the first information is used to indicate the capability of the terminal to perform GNSS measurement in a connected state.

In combination with the third aspect, in some embodiments, the first information is capability indication information of the terminal, or the first information is GNSS measurement assistance information.

In combination with the third aspect, in some embodiments, the first information is capability indication information of the terminal; a value of the capability indication information of the terminal is a first value, and the capability indication information of the terminal is used to indicate that the terminal supports performing a GNSS measurement in a connected state; or a value of the capability indication information of the terminal is a second value, and the capability indication information of the terminal is used to indicate that the terminal does not support performing a GNSS measurement in a connected state.

In combination with the first aspect, in some embodiments, the first information is capability indication information of the terminal; the terminal sending the first information to the network device includes: the terminal sending the capability indication information of the terminal before entering the connected state; or the terminal sending the capability indication information of the terminal after entering the connected state.

In combination with the third aspect, in some embodiments, the first information is GNSS measurement assistance information, a value of the GNSS measurement assistance information is set to a preset value, and the GNSS measurement assistance information is used to indicate that the terminal does not support performing a GNSS measurement in the connected state.

In combination with the third aspect, in some embodiments, the preset value is one of a plurality of optional values of the GNSS measurement assistance information, and the plurality of optional values at least include one preset value.

In a fourth aspect, an embodiment of the present disclosure proposes a communication apparatus. The apparatus includes: a sending module, configured to indicate a capability of the terminal to perform GNSS measurement in a connected state.

In combination with the fourth aspect, in some embodiments, the sending module is configured to send first information, where the first information is used to indicate the capability of the terminal to perform GNSS measurement in a connected state.

In combination with the fourth aspect, in some embodiments, the first information is capability indication information of the terminal, or the first information is GNSS measurement assistance information.

In combination with the fourth aspect, in some embodiments, the first information is capability indication information of the terminal; a value of the capability indication information of the terminal is a first value, and the capability indication information of the terminal is used to indicate that the terminal supports performing a GNSS measurement in a connected state; or a value of the capability indication information of the terminal is a second value, and the capability indication information of the terminal is used to indicate that the terminal does not support performing a GNSS measurement in a connected state.

In combination with the fourth aspect, in some embodiments, the first information is capability indication information of the terminal; the sending module is configured to send the capability indication information of the terminal before entering the connected state; or send the capability indication information of the terminal after entering the connected state.

In combination with the fourth aspect, in some embodiments, the terminal does not support performing a GNSS measurement in the connected state, the first information is the capability indication information of the terminal, and the apparatus further includes: a receiving module, configured to not receive first configuration information sent by a network device, where the first configuration information is used to instruct the terminal to send GNSS measurement time information.

In combination with the fourth aspect, in some embodiments, the first information is GNSS measurement assistance information, a value of the GNSS measurement assistance information is set to a preset value, and the GNSS measurement assistance information is used to indicate that the terminal does not support performing a GNSS measurement in the connected state.

In combination with the fourth aspect, in some embodiments, the preset value is one of a plurality of optional values of the GNSS measurement assistance information, and the plurality of optional values at least include one preset value.

In combination with the fourth aspect, in some embodiments, the terminal does not support performing a GNSS measurement in the connected state; the apparatus further includes: a receiving module, configured to receive first configuration information sent by a network device, where the first configuration information is used to instruct the terminal to send GNSS measurement time information; and the sending module is further configured to not send the GNSS measurement time information.

In combination with the fourth aspect, in some embodiments, the terminal does not support performing a GNSS measurement in the connected state, and the apparatus further includes: a receiving module, configured to, after entering the connected state, not receive second information sent by a network device, where the second information includes at least one of: a GNSS measurement trigger instruction or second configuration information, where the second configuration information is used to instruct the terminal to perform an autonomous GNSS measurement; or the sending module is further configured to not send acknowledgement response information corresponding to the second information.

In a fifth aspect, an embodiment of the present disclosure proposes a communication apparatus. The apparatus includes: a receiving module, configured to obtain a capability, indicated by a terminal, of the terminal to perform GNSS measurement in a connected state.

In combination with the fifth aspect, in some embodiments, the apparatus further includes: a processing module, configured to configure a measurement gap for the terminal based on the capability of the terminal to perform GNSS measurement in a connected state.

In combination with the fifth aspect, in some embodiments, the receiving module is configured to receive first information sent by the terminal, where the first information is used to indicate the capability of the terminal to perform GNSS measurement in a connected state.

In combination with the fifth aspect, in some embodiments, the first information is capability indication information of the terminal; or the first information is GNSS measurement assistance information.

In combination with the fifth aspect, in some embodiments, the first information is capability indication information of the terminal, a value of the capability indication information of the terminal is a first value, and the capability indication information of the terminal is used to indicate that the terminal supports performing a GNSS measurement in a connected state; or a value of the capability indication information of the terminal is a second value, and the capability indication information of the terminal is used to indicate that the terminal does not support performing a GNSS measurement in a connected state.

In combination with the fifth aspect, in some embodiments, the terminal does not support performing a GNSS measurement in the connected state, the first information is the capability indication information of the terminal, and the apparatus further includes: a sending module, configured to not send first configuration information, where the first configuration information is used to instruct the terminal to send GNSS measurement time information.

In combination with the fifth aspect, in some embodiments, the first information is GNSS measurement assistance information, a value of the GNSS measurement assistance information is a preset value, and the GNSS measurement assistance information is used to indicate that the terminal does not support performing a GNSS measurement in the connected state.

In combination with the fifth aspect, in some embodiments, the preset value is one of a plurality of optional values of the GNSS measurement assistance information, and the plurality of optional values at least include one preset value.

In combination with the fifth aspect, in some embodiments, the apparatus further includes: a sending module, configured to send first configuration information, where the first configuration information is used to instruct the terminal to send GNSS measurement time information; and perform at least one of: the receiving module is configured to receive the GNSS measurement time information; the processing module is configured to determine that the terminal supports performing a GNSS measurement in the connected state; the receiving module is further configured to not receive the GNSS measurement time information; the processing module is further configured to determine that the terminal does not support performing a GNSS measurement in the connected state.

In combination with the fifth aspect, in some embodiments, the terminal does not support performing a GNSS measurement in the connected state, and the apparatus further includes: a sending module, configured to not send second information, where the second information includes at least one of: a GNSS measurement trigger instruction or second configuration information, where the second configuration information is used to instruct the terminal to perform an autonomous GNSS measurement.

In a sixth aspect, an embodiment of the present disclosure proposes a communication device. The communication device includes: one or more processors; one or more memories for storing instructions; where the processors are configured to invoke the instructions to cause the communication device to perform the communication method according to any one of the first aspect, the second aspect, and their embodiments.

In a seventh aspect, an embodiment of the present disclosure proposes a communication system. The communication system includes: a terminal and a network device, where the terminal is configured to implement the communication method according to any one of the first aspect and its embodiments, and the network device is configured to implement the communication method according to any one of the second aspect and its embodiments.

In an eighth aspect, an embodiment of the present disclosure proposes a computer-readable storage medium. The computer-readable storage medium stores instructions that, when run on a communication device, cause the communication device to perform the communication method according to any one of the first aspect, the second aspect, and their embodiments.

In a ninth aspect, an embodiment of the present disclosure proposes a computer program product. When the computer program product is executed by a communication device, the communication device is caused to perform the communication method according to any one of the first aspect, the second aspect, and their embodiments.

In a tenth aspect, an embodiment of the present disclosure proposes a computer program. When the computer program is run on a communication device, the computer is caused to perform the communication method according to any one of the first aspect, the second aspect, and their embodiments.

It can be understood that the above communication apparatus, communication device, communication system, computer-readable storage medium, computer program product, and computer program are all used to perform the methods proposed in the embodiments of the present disclosure. Therefore, for the beneficial effects that can be achieved reference can be made to the beneficial effects in the corresponding methods, and details are not repeated here.

The embodiments of the present disclosure propose a communication method and apparatus, device, system, and computer-readable storage medium. In some embodiments, terms such as communication method and information processing method can be replaced with each other. Terms such as communication apparatus and information processing apparatus can be replaced with each other. Terms such as communication system and information processing system can be replaced with each other.

The embodiments of the present disclosure are not exhaustive, but are only illustrative of some embodiments, and do not specifically limit the protection scope of the present disclosure. In case of no conflict, each step in a certain embodiment can be implemented as an independent embodiment, and the steps can be combined arbitrarily. For example, a solution after removing some steps in a certain embodiment can also be implemented as an independent embodiment, and the steps in a certain embodiment can be exchanged arbitrarily. In addition, optional implementation manners in a certain embodiment can be combined arbitrarily. Furthermore, the embodiments can be combined arbitrarily. For example, some or all steps of different embodiments can be combined arbitrarily. For another example, a certain embodiment can be arbitrarily combined with optional implementation manners of other embodiments.

In the embodiments of the present disclosure, unless otherwise specified and there is a logical conflict, the terms and/or descriptions between the embodiments are consistent and can refer to each other, and the technical features in different embodiments can be combined to form new embodiments according to their inherent logical relationships.

The terms used in the embodiments of the present disclosure are only for the purpose of describing specific embodiments and are not intended to limit the present disclosure.

In the embodiments of the present disclosure, unless otherwise stated, elements expressed in the singular form, such as "a", "an", "the", "above", "said", "aforementioned", "this", etc., may mean "one and only one", or may mean "one or more", "at least one", etc. For example, when using articles such as "a", "an", "the" in English in translation, the noun following the article may be understood as a singular expression form, or may be understood as a plural expression form.

In the embodiments of the present disclosure, "a plurality of" means two or more.

In some embodiments, terms such as "at least one of", "one or more", "a plurality of", "multiple" can be replaced with each other.

In some embodiments, expressions such as "at least one of A and B", "A and/or B", "in one case A, in another case B", "in response to one case A, in response to another case B", etc., may include the following technical solutions according to the situation: in some embodiments A (performing A regardless of B); in some embodiments B (performing B regardless of A); in some embodiments selecting to execute from A and B (A and B are selectively executed); in some embodiments A and B (both A and B are executed). When there are more branches such as A, B, C, etc., it is similar to the above.

In some embodiments, expressions such as "A or B", etc., may include the following technical solutions according to the situation: in some embodiments A (performing A regardless of B); in some embodiments B (performing B regardless of A); in some embodiments selecting to execute from A and B (A and B are selectively executed). When there are more branches such as A, B, C, etc., it is similar to the above.

The prefix words such as "first", "second", etc., in the embodiments of the present disclosure are only used to distinguish different described objects, and do not constitute limitations on the position, order, priority, quantity, or content of the described objects. The description of the described objects refers to the description in the claims or the context of the embodiments, and should not be construed as redundant limitations due to the use of prefix words. For example, if the described object is "field", then the ordinal numbers before "field" in "first field" and "second field" do not limit the position or order between the "fields", and "first" and "second" do not limit whether the "fields" they modify are in the same message, nor do they limit the sequence of "first field" and "second field". For another example, if the described object is "level", then the ordinal numbers before "level" in "first level" and "second level" do not limit the priority between the "levels". For another example, the quantity of the described object is not limited by the ordinal numbers, and may be one or more. Taking "first apparatus" as an example, the quantity of "apparatus" may be one or more. In addition, objects modified by different prefix words may be the same or different. For example, if the described object is "apparatus", then "first apparatus" and "second apparatus" may be the same apparatus or different apparatuses, and their types may be the same or different. For another example, if the described object is "information", then "first information" and "second information" may be the same information or different information, and their contents may be the same or different.

In some embodiments, "including A", "containing A", "used to indicate A", "carrying A" may be interpreted as directly carrying A, or may be interpreted as indirectly indicating A.

In some embodiments, terms such as "in response to...", "in response to determining...", "in the case of...", "when...", "if...", etc., can be replaced with each other.

In some embodiments, terms such as "greater than", "greater than or equal to", "not less than", "more than", "more than or equal to", "not less than", "higher than", "higher than or equal to", "not lower than", "above", etc., can be replaced with each other. Terms such as "less than", "less than or equal to", "not greater than", "less than", "less than or equal to", "not more than", "lower than", "lower than or equal to", "not higher than", "below", etc., can be replaced with each other.

In some embodiments, apparatuses, etc., may be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", "subject", etc., can be replaced with each other.

In some embodiments, "network" may be interpreted as devices included in the network (e.g., access network devices, core network devices, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femtocell", "picocell", "sector", "cell group", "serving cell", "carrier", "component carrier", "bandwidth part (BWP)", etc., can be replaced with each other.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc., can be replaced with each other.

In some embodiments, an access network device, a core network device, or a network device may be replaced with a terminal. For example, for a structure where communication between an access network device, a core network device, or a network device and a terminal is replaced with communication between multiple terminals (e.g., device-to-device (D2D), vehicle-to-everything (V2X), etc.), the various embodiments of the present disclosure may also be applied. In this case, the terminal may also be structured to have all or part of the functions of the access network device. In addition, terms such as "uplink", "downlink", etc., may also be replaced with terms corresponding to communication between terminals (e.g., "side"). For example, uplink channels, downlink channels, etc., may be replaced with sidelink channels, and uplink links, downlink links, etc., may be replaced with sidelink links.

In some embodiments, a terminal may be replaced with an access network device, a core network device, or a network device. In this case, the access network device, core network device, or network device may also be structured to have all or part of the functions of the terminal.

In some embodiments, obtaining data, information, etc., may comply with the laws and regulations of the country where it is located.

In some embodiments, data, information, etc., may be obtained after obtaining user consent.

In addition, each element, each row, or each column in the tables of the embodiments of the present disclosure may be implemented as an independent embodiment, and any combination of elements, rows, or columns may also be implemented as an independent embodiment.

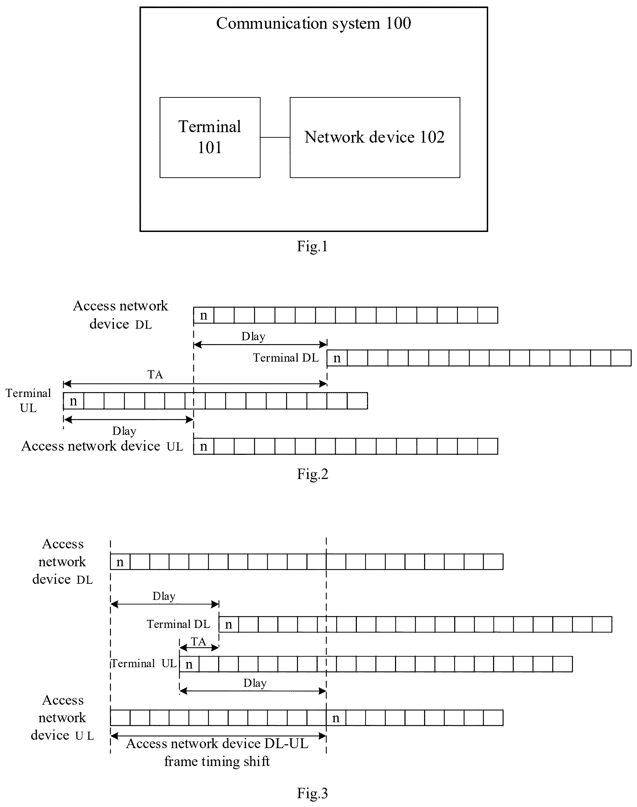

FIG. 1 is a schematic architectural diagram of a communication system according to an embodiment of the present disclosure.

As shown in FIG. 1, a communication system 100 includes a terminal 101 and an access network device 102.

In some embodiments, the terminal 101 includes, for example, at least one of a mobile phone, a wearable device, an IoT device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, but not limited thereto.

In some embodiments, the access network device 102 is, for example, a node or device that connects the terminal to a wireless network. The access network device may include at least one of an evolved NodeB (eNB) in a 5G communication system, a next generation evolved NodeB (ng-eNB), a next generation NodeB (gNB), a Node B (NB), a home NodeB (HNB), a home evolved NodeB (HeNB), a wireless backhaul device, a radio network controller (RNC), a base station controller (BSC), a base transceiver station (BTS), a baseband unit (BBU), a mobile switching center, a base station in a 6G communication system, an open radio access network (Open RAN), a cloud radio access network (Cloud RAN), a base station in other communication systems, an access node in a Wi-Fi system, but not limited thereto.

In some embodiments, the technical solution of the present disclosure may be applied to an Open Radio Access Network (Open RAN) architecture. In this case, the interfaces between access network devices or within an access network device involved in the embodiments of the present disclosure may become internal interfaces of the Open RAN, and the processes and information interaction between these internal interfaces may be implemented through software or programs.

In some embodiments, the access network device may be composed of a central unit (CU) and a distributed unit (DU), where the CU may also be called a control unit. Using the CU-DU structure, the protocol layers of the access network device can be split, with the functions of some protocol layers placed in the CU for centralized control, and the functions of the remaining part or all protocol layers distributed in the DU, and the CU centrally controls the DU, but not limited thereto.

It can be understood that the communication system described in the embodiments of the present disclosure is to more clearly illustrate the technical solutions of the embodiments of the present disclosure, and does not constitute a limitation on the technical solutions proposed in the embodiments of the present disclosure. Those of ordinary skill in the art may know that as the system architecture evolves and new business scenarios emerge, the technical solutions proposed in the embodiments of the present disclosure are equally applicable to similar technical problems.

The following embodiments of the present disclosure may be applied to the communication system 100 shown in FIG. 1, or part of the entities in the communication system 100, but not limited thereto. The entities shown in FIG. 1 are illustrative. The communication system 100 may include all or part of the entities in FIG. 1, and may also include other entities not shown in FIG. 1. The number and form of the entities are arbitrary. The entities may be physical or virtual. The connection relationships between the entities are illustrative. The entities may not be connected or may be connected. The connection may be in any manner, may be direct connection or indirect connection, and may be wired connection or wireless connection.

The embodiments of the present disclosure may be applied to Long Term Evolution (LTE), LTE-Advanced (LTE-A), LTE-Beyond (LTE-B), SUPER 3G, International Mobile Telecommunications-Advanced (IMT-Advanced), 4th Generation Mobile Communication System (4G), 5th Generation Mobile Communication System (5G), 5G New Radio (NR), Future Radio Access (FRA), New-Radio Access Technology (RAT), New Radio (NR), New Radio Access (NX), Future Generation Radio Access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X), systems using other communication methods, next-generation systems based on them, etc. In addition, a combination of multiple systems (e.g., a combination of LTE or LTE-A and 5G, etc.) may also be applied.

In the embodiments of the present disclosure, the continuous emergence of new Internet applications such as Augmented Reality (AR), Virtual Reality (VR), and Vehicle-to-Vehicle (V2V) in the new generation has put forward higher requirements for wireless communication technologies, driving the continuous evolution of wireless communication technologies to meet the needs of applications. Currently, cellular mobile communication technology is in the evolution stage of a new generation of technology. An important feature of the new generation of technology is to support flexible configuration of multiple service types. Since different service types have different requirements for wireless communication technology, such as enhanced Mobile Broadband (eMBB) service type mainly focuses on requirements such as large bandwidth and high speed; Ultra-Reliable Low-Latency Communications (URLLC) service type mainly focuses on requirements such as high reliability and low latency; massive Machine Type Communication (mMTC) service type mainly focuses on requirements such as large connection numbers. Therefore, the new generation of wireless communication systems needs flexible and configurable design to support the transmission of multiple service types.

In wireless communication technology, satellite communication is considered an important aspect of the future development of wireless communication technology. Satellite communication refers to communication conducted by radio communication equipment on the ground using satellites as relays. The satellite communication system consists of a satellite part and a ground part. The characteristics of satellite communication are: large communication range; as long as within the coverage of the radio waves transmitted by the satellite, communication can be conducted between any two points; not easily affected by terrestrial disasters, high reliability.

As a supplement to terrestrial communication systems, satellite communication has the following characteristics: 1. It can extend coverage: for areas where cellular communication systems cannot cover or where coverage costs are high, such as oceans, deserts, and remote mountainous areas, communication problems can be solved through satellite communication. 2. Emergency communication: under extreme conditions where disasters (e.g., earthquakes, etc.) cause the infrastructure of cellular communication to be unavailable, satellite communication can be used to quickly establish communication connections. 3. Provide industry applications: for example, for latency-sensitive services with long-distance transmission, satellite communication can be used to reduce the latency of service transmission.

It is foreseeable that in future wireless communication systems, satellite communication systems and terrestrial cellular communication systems will gradually achieve deep integration, thereby truly realizing the intelligent connection of all things.

In the embodiments of the present disclosure, for satellite communication scenarios, due to the long signal transmission distance between the sender and receiver, data transmission has a large delay. For transmissions with uplink and downlink relationships, an offset parameter (K_offset) can be introduced to compensate for the transmission delay. Among them, K_offset can be applied in various operations, such as: downlink control information (DCI) scheduled physical uplink shared channel (PUSCH) transmission; hybrid automatic repeat request (HARQ) feedback information transmission; and media access control (MAC) control element (CE) transmission, etc.

In some embodiments, the propagation delay in satellite communication systems is much longer than that in terrestrial mobile systems, ranging from a few milliseconds to hundreds of milliseconds depending on the height of the space-based or airborne platform and the type of payload in the satellite communication system. Therefore, in satellite communication systems, the terminal needs to apply a larger timing advance (TA) value, but this will cause a large offset in its downlink (DL) and uplink (UL) frame timing. FIG. 2 shows a scenario where the terminal applies a larger TA and the DL frame and UL frame timing of the network device (such as an access network device) are aligned. FIG. 3 shows another scenario where the DL frame and UL frame of the access network device do not need to be aligned. The terminal applies terminal-specific TA (such as UE-specific TA) to align the DL frame and UL frame timing at a predetermined reference point. However, for the scenario shown in FIG. 3, the network device side requires additional complexity to manage the corresponding scheduling timing of this scenario. Thus, it is necessary to enhance various timing relationships to cope with the large offset in the timing of the terminal's DL frame and UL frame.

Then, in satellite communication scenarios, the terminal needs to know its own position information in order to perform uplink synchronization compensation. In some embodiments, the terminal can obtain its own position information through a navigation satellite system, such as the global navigation satellite system (GNSS).

In some embodiments, the global navigation satellite system (GNSS) may include China's BeiDou Navigation Satellite System (BDS), the United States' Global Positioning System (GPS), Russia's Global Navigation Satellite System (GLONASS), and the European Union's Galileo Navigation Satellite System (GALILEO), and other countries' navigation satellite systems and their evolution systems. Of course, it may also include other navigation systems, which are not specifically limited in the embodiments of the present disclosure.

In some embodiments, for IoT terminals, they do not support the simultaneous operation of the cellular module and the GNSS module, and can support sporadic transmission. After the terminal obtains the GNSS measurement results, the available time of GNSS can be sent to the network device through, for example, GNSS validity duration. When the GNSS validity duration of the terminal expires, the terminal will enter an idle (IDLE) state.

Before the terminal performs measurement, the terminal also needs to send the time information required for measurement (such as GNSS measurement time information (GNSS position fix time)) to the network device, so that the base station can configure a suitable measurement gap. However, for some terminals, they may not support performing a GNSS measurement in a connected state.

It should be noted that the above "GNSS measurement" may also be described as "GNSS positioning".

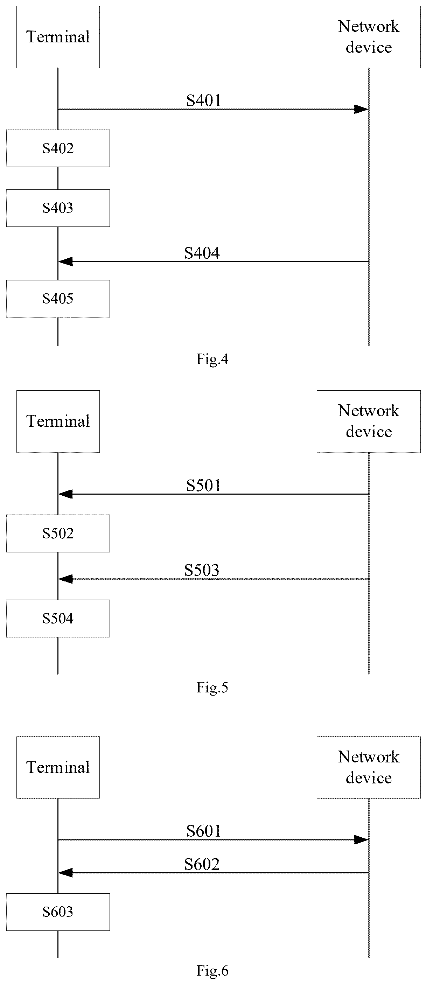

FIG. 4 is a first schematic flowchart of a communication method performed by a terminal side according to an embodiment of the present disclosure. This embodiment relates to a communication method, used in the terminal 101 in the communication system 100. As shown in FIG. 4, the communication method of this embodiment includes steps S401 to S405.

Step S401: the terminal sending first information.

In some embodiments, the network device receives the first information.

In some embodiments, the first information is used to indicate the capability of the terminal to perform GNSS measurement in a connected state.

In some embodiments, the capability of the terminal to perform GNSS measurement in a connected state may include the capability of the terminal to support performing a GNSS measurement in a connected state and the capability of the terminal not to support performing a GNSS measurement in a connected state.

In some embodiments, the capability of the terminal to support performing a GNSS measurement in a connected state may indicate that the terminal supports performing a GNSS measurement in a connected state.

In some embodiments, the capability of the terminal not to support performing a GNSS measurement in a connected state may indicate that the terminal does not support performing a GNSS measurement in a connected state.

In some embodiments, the first information is used to indicate whether the terminal supports performing a GNSS measurement in a connected state.

In some embodiments, the first information is used to indicate that the terminal supports performing a GNSS measurement in a connected state, or to indicate that the terminal does not support performing a GNSS measurement in a connected state.

In some embodiments, terms such as "the terminal performing a GNSS measurement in a connected state", "the terminal performing a GNSS measurement in a connected state", etc., can be replaced with each other.

In some embodiments, the first information may be capability indication information of the terminal.

In some embodiments, the first information may be GNSS measurement assistance information.

In some embodiments, a value of the capability indication information of the terminal is a first value, and the capability indication information of the terminal is used to indicate that the terminal supports performing a GNSS measurement in a connected state. Exemplarily, the first value may be 1, indicating that the terminal supports performing a GNSS measurement in a connected state.

In some embodiments, a value of the capability indication information of the terminal is a first value, and the capability indication information of the terminal is used to indicate the capability of the terminal to support performing a GNSS measurement in a connected state. Exemplarily, the first value may be 1, indicating the capability of the terminal to support performing a GNSS measurement in a connected state.

In some embodiments, a value of the capability indication information of the terminal is a second value, and the capability indication information of the terminal is used to indicate that the terminal does not support performing a GNSS measurement in a connected state. Exemplarily, the second value may be 0, indicating that the terminal does not support performing a GNSS measurement in a connected state.

In some embodiments, a value of the capability indication information of the terminal is a second value, and the capability indication information of the terminal is used to indicate the capability of the terminal not to support performing a GNSS measurement in a connected state. Exemplarily, the second value may be 0, indicating the capability of the terminal not to support performing a GNSS measurement in a connected state.

In some embodiments, the first value and the second value may be represented by a value represented by 1 bit (0 or 1), or by a truth value (boolean value) represented by true or false, or by numerical comparison (e.g., comparison with a predetermined value), but not limited thereto.

In some embodiments, the first information may be GNSS measurement assistance information.

In some embodiments, a value of the GNSS measurement assistance information may be set to a preset value, at this time, the GNSS measurement assistance information is used to indicate that the terminal does not support performing a GNSS measurement in a connected state. Exemplarily, the preset value may be "infinite", "reserved", but not limited thereto.

In some embodiments, a value of the GNSS measurement assistance information may be set to a non-preset value, at this time, the GNSS measurement assistance information is used to indicate that the terminal supports performing a GNSS measurement in a connected state.

In some embodiments, the GNSS measurement assistance information may have a plurality of optional values, and the plurality of optional values at least include one preset value. That is, the preset value may be one of the plurality of optional values of the GNSS measurement assistance information. The non-preset value may be one of the plurality of optional values of the GNSS measurement assistance information other than the preset value.

In some embodiments, the GNSS measurement assistance information may include a preset information field, and the preset information field is used to indicate the capability of the terminal to perform GNSS measurement in a connected state.

In some embodiments, a value of the preset information field in the GNSS measurement assistance information may be set to a preset value, and the GNSS measurement assistance information is used to indicate that the terminal does not support performing a GNSS measurement in a connected state.

In some embodiments, a value of the preset information field in the GNSS measurement assistance information may be set to a non-preset value, at this time, the GNSS measurement assistance information is used to indicate that the terminal supports performing a GNSS measurement in a connected state.

In some embodiments, terms such as "preset", "certain", "preset", "set", "indicated", "a certain", "arbitrary", "third", etc., can be replaced with each other. "Specific value", "predetermined value", "preset value", "set value", "indicated value", "a certain value", "arbitrary value", or "third value" may be interpreted as a value predefined in protocols, etc., or may be interpreted as a value obtained through setting, configuration, or indication, etc., or may be interpreted as a specific value, a certain value, an arbitrary value, or a third value, etc., but not limited thereto.

In some embodiments, the terminal may send the first information before entering the connected state.

In some embodiments, the terminal may send the first information after entering the connected state.

In some embodiments, the terminal may send the capability indication information of the terminal to the network device before entering the connected state.

In some embodiments, the terminal may send the capability indication information of the terminal to the network device after entering the connected state.

In some embodiments, the terminal may autonomously send the capability indication information of the terminal to the network device.

In some embodiments, the terminal may send the capability indication information of the terminal to the network device based on triggering by the network device.

In some embodiments, the network device sends trigger information to the terminal, and the terminal may, in response to the trigger information, send the capability indication information of the terminal to the network device.

In some embodiments, the trigger information may be a GNSS measurement trigger instruction.

In some embodiments, the trigger information may be configuration information instructing the terminal to perform autonomous GNSS positioning.

In some embodiments, the terminal does not support performing a GNSS measurement in the connected state. At this time, after step S401, the terminal may perform at least one of step S402, step S403, or steps S404 to S405.

Step S402: the terminal does not receive first configuration information sent by the network device.

In some embodiments, the first configuration information is used to instruct the terminal to send GNSS measurement time information. Exemplarily, the first configuration information may be GNSS measurement time reporting configuration information, and the GNSS measurement time information may be GNSS position fix time.

In some embodiments, "the terminal does not receive the first configuration information sent by the network device" may be interpreted as "the terminal does not expect the network device to send the first configuration information", or may be interpreted as "the terminal does not expect to receive the first configuration information sent by the network device".

Step S403: the terminal does not receive second information sent by the network device after entering the connected state.

In some embodiments, "the terminal does not receive the second information sent by the network device" may be interpreted as "the terminal does not expect the network device to send the second information", or may be interpreted as "the terminal does not expect to receive the second information sent by the network device".

In some embodiments, the terminal does not expect to receive the second information sent by the network device after entering the connected state.

In some embodiments, the second information includes at least one of: a GNSS measurement trigger instruction and second configuration information.

In some embodiments, the second configuration information is used to instruct the terminal to perform an autonomous GNSS measurement. Exemplarily, the second configuration information may be GNSS measurement configuration information of the terminal.

Step S404: the terminal receiving second information sent by the network device after entering the connected state.

Step S405: the terminal does not send acknowledgement response information corresponding to the second information.

In some embodiments, "acknowledgement response information corresponding to the second information" may be interpreted as one of "acknowledgement response information of the second information", "acknowledgement information of the second information", "response information of the second information", etc. Exemplarily, the acknowledgement response information corresponding to the second information may be positive acknowledgement (ACK) information or negative acknowledgement (NACK) information of the second information.

In some embodiments, the above "does not receive" may be interpreted as "does not expect to receive". "Does not expect to receive" may be interpreted as not receiving on time domain resources and/or frequency domain resources, or may be interpreted as not performing subsequent processing on the data, etc., after receiving the data, etc.

In some embodiments, the above "does not send" may be interpreted as "does not expect to send". "Does not expect to send" may be interpreted as not sending on time domain resources and/or frequency domain resources, or may be interpreted as sending but not expecting the receiver to respond to the sent content.

The communication method involved in this embodiment may include at least one of steps S401 to S405. For example, step S401 may be implemented as an independent embodiment. For example, the combination of step S401 and step S402 may be implemented as an independent embodiment. For example, the combination of step S401 and step S403 may be implemented as an independent embodiment. For example, the combination of step S401, step S404, and step S405 may be implemented as an independent embodiment. It should be noted that the possible independent embodiments composed of one or more steps from steps S401 to S405 are not limited thereto.

In some embodiments, at least two of steps S401 to S405 may be exchanged in order or executed synchronously. For example, step S402 and step S403 may be exchanged in order or executed simultaneously. For example, step S402 and steps S404 to S405 may be exchanged in order or executed simultaneously. For example, step S403 and steps S404 to S405 may be exchanged in order or executed simultaneously.

In the above embodiment, the terminal indicates whether it supports performing a GNSS measurement in a connected state by sending the first information to the network device. In this way, the network device can accurately obtain the GNSS measurement capability of the terminal according to the indication of the first information, thereby performing appropriate operations, configuring a GNSS measurement gap for the terminal, and thus improving the accuracy of GNSS measurement.

FIG. 5 is a second schematic flowchart of a communication method performed by a terminal side according to an embodiment of the present disclosure. This embodiment relates to a communication method, used in the terminal 101 in the communication system 100. As shown in FIG. 5, the communication method of this embodiment includes steps S501 to S504.

Step S501: the terminal receiving first configuration information sent by the network device.

In some embodiments, the terminal receives the first configuration information sent by the network device.

Step S502: the terminal does not send GNSS measurement time information.

In some embodiments, the terminal does not support the capability to perform GNSS measurement in a connected state. After receiving the first configuration information, the terminal may not respond to the first configuration information and does not send any GNSS measurement time information to the network device. At this time, the network device does not receive the GNSS measurement time information and determines that the terminal does not support the capability to perform GNSS measurement in a connected state.

In some embodiments, after step S501, the terminal may also send GNSS measurement time information to the network device.

In some embodiments, the terminal supports the capability to perform GNSS measurement in a connected state. After receiving the first configuration information, the terminal may respond to the first configuration information and send GNSS measurement time information to the network device. At this time, the network device receives the GNSS measurement time information and determines that the terminal supports the capability to perform GNSS measurement in a connected state.

In this embodiment, the terminal not sending the GNSS measurement time information is used to indicate to the network device that the terminal does not support performing a GNSS measurement in a connected state. The terminal sending the GNSS measurement time information to the network device is used to indicate to the network device that the terminal supports performing a GNSS measurement in a connected state. In summary, the terminal indicates the capability of the terminal to perform GNSS measurement in a connected state by whether it responds to the first configuration information to send GNSS measurement time information to the network device.

In some embodiments, the terminal does not support performing a GNSS measurement in a connected state, and the terminal may also perform steps S503 to S504.

Step S503: the terminal receiving second information sent by the network device after entering the connected state.

Step S504: the terminal does not send acknowledgement response information corresponding to the second information.

In some embodiments, "acknowledgement response information corresponding to the second information" may be interpreted as one of "acknowledgement response information of the second information", "acknowledgement information of the second information", "response information of the second information", etc. Exemplarily, the acknowledgement response information corresponding to the second information may be positive acknowledgement (ACK) information or negative acknowledgement (NACK) information of the second information.

In some embodiments, the above "does not receive" may be interpreted as "does not expect to receive". "Does not expect to receive" may be interpreted as not receiving on time domain resources and/or frequency domain resources, or may be interpreted as not performing subsequent processing on the data, etc., after receiving the data, etc.

In some embodiments, the above "does not send" may be interpreted as "does not expect to send". "Does not expect to send" may be interpreted as not sending on time domain resources and/or frequency domain resources, or may be interpreted as sending but not expecting the receiver to respond to the sent content.

The communication method involved in this embodiment may include at least one of steps S501 to S504. For example, step S501 may be implemented as an independent embodiment. For example, the combination of step S501 and step S502 may be implemented as an independent embodiment. For example, the combination of step S501, step S503, and step S504 may be implemented as an independent embodiment. For example, the combination of step S503 and step S504 may be implemented as an independent embodiment. It should be noted that the possible independent embodiments composed of one or more steps from steps S501 to S504 are not limited thereto.

In some embodiments, at least two of steps S501 to S504 may be exchanged in order or executed synchronously. For example, step S502 and steps S503 to S504 may be exchanged in order or executed simultaneously.

In the above embodiment, in a case where the terminal does not support performing a GNSS measurement in a connected state, the terminal may not receive the first configuration information sent by the network device for instructing the terminal to send GNSS measurement time information, thereby reducing its own power consumption.

In the above embodiment, the terminal indicates whether it supports performing a GNSS measurement in a connected state by whether it responds to the first configuration information to send GNSS measurement time information to the network device. In this way, the network device can accurately obtain the GNSS measurement capability of the terminal according to the indication of the terminal, thereby performing appropriate operations, configuring a GNSS measurement gap for the terminal, and thus improving the accuracy of GNSS measurement. Further, in a case where the terminal does not support performing a GNSS measurement in a connected state, the terminal may not receive the first configuration information sent by the network device for instructing the terminal to send GNSS measurement time information, thereby reducing its own power consumption.

FIG. 6 is a third schematic flowchart of a communication method performed by a terminal side according to an embodiment of the present disclosure. This embodiment relates to a communication method, used in the terminal 101 in the communication system 100. As shown in FIG. 6, the communication method of this embodiment includes steps S601 to S603.

Step S601: the terminal indicating to the network device its capability to perform GNSS measurement in a connected state.

It should be noted that for the specific description of step S601 reference can be made to the description of step S401 in the embodiment of FIG. 4 and the description of step S501 in the embodiment of FIG. 5. For the sake of brevity of the description, it will not be repeated here.

Step S602: the terminal receiving second information sent by the network device after entering the connected state.

Step S603: the terminal does not send acknowledgement response information corresponding to the second information.

It should be noted that for the specific descriptions of steps S602 to S603 reference can be made to the descriptions of steps S404 to S405 in the embodiment of FIG. 4 and the descriptions of steps S503 to S504 in the embodiment of FIG. 5. For the sake of brevity of the description, it will not be repeated here.

In the above embodiment, the terminal indicates to the network device its capability to perform GNSS measurement in a connected state, that is, the terminal reports to the network device whether it supports performing a GNSS measurement in a connected state. In this way, the network device can accurately obtain the GNSS measurement capability of the terminal, thereby performing appropriate operations, configuring a GNSS measurement gap for the terminal, and thus improving the accuracy of GNSS measurement.

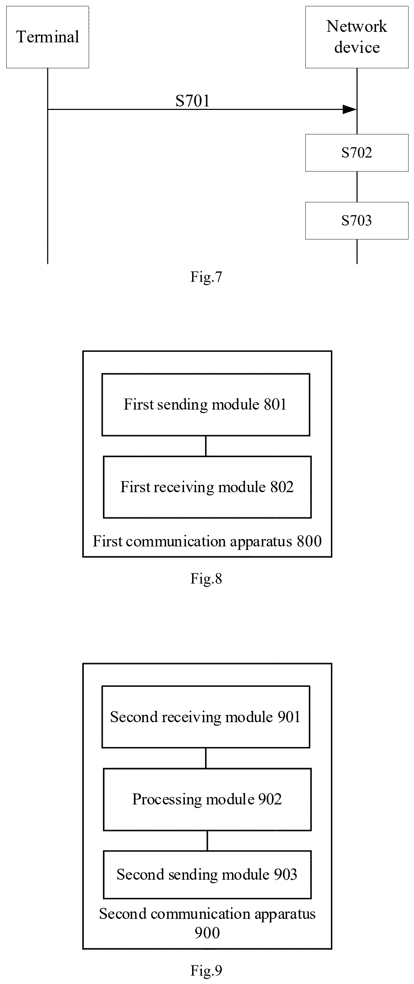

FIG. 7 is a schematic flowchart of a communication method performed by a network device side according to an embodiment of the present disclosure. This embodiment relates to a communication method, used in the network device 102 in the communication system 100, such as an access network device. As shown in FIG. 7, the communication method of this embodiment includes steps S701 to S703.

Step S701: the network device obtaining the capability, indicated by the terminal, of the terminal to perform GNSS measurement in a connected state.

It should be noted that for the specific description of step S701 reference can be made to the description of step S401 in the embodiment of FIG. 4 and the description of step S501 in the embodiment of FIG. 5. For the sake of brevity of the description, it will not be repeated here.

In some embodiments, "obtain", "acquire", "get", "receive", "transmit", "bidirectional transmission", "send and/or receive" can be replaced with each other, which may be interpreted as receiving from another entity, obtaining from a protocol, obtaining from a higher layer, obtaining by its own processing, autonomous implementation, and other meanings.

In some embodiments, after step S701, the network device may also perform at least one of step S702 and step S703.

Step S702: the network device does not send first configuration information to the terminal.

In some embodiments, the terminal does not support performing a GNSS measurement in a connected state, and the network device may not send the first configuration information to these terminals.

In some embodiments, the terminal does not support performing a GNSS measurement in a connected state, and the network device may send the first configuration information to these terminals. The terminal may not receive the first configuration information or not respond to the first configuration information, and does not send any GNSS measurement time information to the network device.

In some embodiments, the terminal supports performing a GNSS measurement in a connected state, and the network device sends the first configuration information to these terminals. The terminal responds to the first configuration information and sends GNSS measurement time information to the network device. The network device configures a measurement gap for the terminal according to the GNSS measurement time information sent by the terminal.

Step S703: the network device does not send second information to the terminal.

In some embodiments, the terminal does not support performing a GNSS measurement in a connected state, and the network device may not send the second information to the terminal.

In some embodiments, the terminal does not support performing a GNSS measurement in a connected state, and the network device may also send the second information to the terminal, and the terminal may not receive the second information.

In some embodiments, the terminal does not support performing a GNSS measurement in a connected state, and the network device may also send the second information to the terminal, and the terminal may not send acknowledgement response information corresponding to the second information to the network device.

In some embodiments, the above "does not receive" may be interpreted as "does not expect to receive". "Does not expect to receive" may be interpreted as not receiving on time domain resources and/or frequency domain resources, or may be interpreted as not performing subsequent processing on the data, etc., after receiving the data, etc.

In some embodiments, the above "does not send" may be interpreted as "does not expect to send". "Does not expect to send" may be interpreted as not sending on time domain resources and/or frequency domain resources, or may be interpreted as sending but not expecting the receiver to respond to the sent content.

In the above embodiment, the terminal indicates to the network device its capability to perform GNSS measurement in a connected state, that is, the terminal reports to the network device whether it supports performing a GNSS measurement in a connected state. In this way, the network device can accurately obtain the GNSS measurement capability of the terminal, thereby performing appropriate operations, configuring a GNSS measurement gap for the terminal, and thus improving the accuracy of GNSS measurement. Further, in the above embodiment, in a case where the terminal does not support performing a GNSS measurement in a connected state, the network device may not send the first configuration information and/or the second information to the terminal, to save system resources.

It should be noted that in the above one or more embodiments, the names of the above information, etc., are not limited to the names recorded in the above embodiments. Terms such as "information", "message", "signal", "signaling", "report", "configuration", "indication", "instruction", "command", "channel", "parameter", "field", "field", "symbol", "symbol", "code book", "code word", "code point", "bit", "data", "program", "chip", etc., can be replaced with each other.

Based on the same inventive concept, an embodiment of the present disclosure provides a communication apparatus (i.e., a first communication apparatus). The first communication apparatus may be a terminal in a communication system, or a chip or system-on-chip in the terminal, or may be a functional module in the terminal for implementing the methods described in the above various embodiments. The first communication apparatus can implement the functions performed by the terminal in the above various embodiments. These functions can be implemented by hardware executing corresponding software. The hardware or software includes one or more modules corresponding to the above functions. FIG. 8 is a schematic structural diagram of a first communication apparatus according to an embodiment of the present disclosure. As shown in FIG. 8, the first communication apparatus 800 may include: a first sending module 801, configured to indicate a capability of the terminal to perform GNSS measurement in a connected state.

In some embodiments, the first sending module 801 is configured to send first information, where the first information is used to indicate the capability of the terminal to perform GNSS measurement in a connected state.

In some embodiments, the first information is capability indication information of the terminal, or the first information is GNSS measurement assistance information.

In some embodiments, the first information is capability indication information of the terminal; a value of the capability indication information of the terminal is a first value, and the capability indication information of the terminal is used to indicate that the terminal supports performing a GNSS measurement in a connected state; or a value of the capability indication information of the terminal is a second value, and the capability indication information of the terminal is used to indicate that the terminal does not support performing a GNSS measurement in a connected state.

In some embodiments, the first information is capability indication information of the terminal; the first sending module 801 is configured to send the capability indication information of the terminal before entering the connected state; or send the capability indication information of the terminal after entering the connected state.

In some embodiments, the terminal does not support performing a GNSS measurement in the connected state, the first information is the capability indication information of the terminal, and the first communication apparatus 800 further includes: a first receiving module 802, configured to not receive first configuration information sent by a network device, where the first configuration information is used to instruct the terminal to send GNSS measurement time information.

In some embodiments, the first information is GNSS measurement assistance information, a value of the GNSS measurement assistance information is set to a preset value, and the GNSS measurement assistance information is used to indicate that the terminal does not support performing a GNSS measurement in the connected state.

In some embodiments, the preset value is one of a plurality of optional values of the GNSS measurement assistance information, and the plurality of optional values at least include one preset value.

In some embodiments, the terminal does not support performing a GNSS measurement in the connected state; the receiving module 802 is configured to receive first configuration information sent by a network device, where the first configuration information is used to instruct the terminal to send GNSS measurement time information; the sending module 801 is further configured to not send the GNSS measurement time information.

In some embodiments, the terminal does not support performing a GNSS measurement in the connected state, the receiving module 802 is configured to, after entering the connected state, not receive second information sent by a network device, where the second information includes at least one of: a GNSS measurement trigger instruction or second configuration information, where the second configuration information is used to instruct the terminal to perform an autonomous GNSS measurement; or the sending module 801 is further configured to not send acknowledgement response information corresponding to the second information.

It should be noted that for the specific implementation processes of the first sending module 801 and the first receiving module 802 reference can be made to the detailed descriptions in the embodiments of FIG. 4 to FIG. 6. For the sake of brevity of the description, they are not repeated here.

The first sending module 801 mentioned in this embodiment may be a sending interface, a sending circuit, or a transmitter, etc.; the first receiving module 802 may be a receiving interface, a receiving circuit, or a receiver, etc.

Based on the same concept, an embodiment of the present disclosure provides a communication apparatus (i.e., a second communication apparatus). The second communication apparatus may be a network device in a communication system, or a chip or system-on-chip in the network device, or may be a functional module in the network device for implementing the methods described in the above various embodiments. The second communication apparatus can implement the functions performed by the network device in the above various embodiments. These functions can be implemented by hardware executing corresponding software. The hardware or software includes one or more modules corresponding to the above functions. FIG. 9 is a schematic structural diagram of a second communication apparatus according to an embodiment of the present disclosure. As shown in FIG. 9, the second communication apparatus 900 may include: a second receiving module 901, configured to obtain a capability, indicated by a terminal, of the terminal to perform GNSS measurement in a connected state.

In some embodiments, the second communication apparatus 900 further includes: a processing module 902, configured to configure a measurement gap for the terminal based on the capability of the terminal to perform GNSS measurement in a connected state.

In some embodiments, the second receiving module 901 is configured to receive first information sent by the terminal, where the first information is used to indicate the capability of the terminal to perform GNSS measurement in a connected state.

In some embodiments, the first information is capability indication information of the terminal; or the first information is GNSS measurement assistance information.

In some embodiments, the first information is capability indication information of the terminal, a value of the capability indication information of the terminal is a first value, and the capability indication information of the terminal is used to indicate that the terminal supports performing a GNSS measurement in a connected state; or a value of the capability indication information of the terminal is a second value, and the capability indication information of the terminal is used to indicate that the terminal does not support performing a GNSS measurement in a connected state.

In some embodiments, the terminal does not support performing a GNSS measurement in the connected state, the first information is the capability indication information of the terminal, and the communication apparatus further includes: a second sending module 903, configured to not send first configuration information, where the first configuration information is used to instruct the terminal to send GNSS measurement time information.

In some embodiments, the first information is GNSS measurement assistance information, a value of the GNSS measurement assistance information is a preset value, and the GNSS measurement assistance information is used to indicate that the terminal does not support performing a GNSS measurement in the connected state.

In some embodiments, the preset value is one of a plurality of optional values of the GNSS measurement assistance information, and the plurality of optional values at least include one preset value.

In some embodiments, the second communication apparatus further includes: a second sending module 903, configured to send first configuration information, where the first configuration information is used to instruct the terminal to send GNSS measurement time information; the processing module 902 is configured to perform at least one of: the second receiving module 901 receives the GNSS measurement time information, and determines that the terminal supports performing a GNSS measurement in the connected state; the second receiving module 901 does not receive the GNSS measurement time information, and determines that the terminal does not support performing a GNSS measurement in the connected state.

In some embodiments, the terminal does not support performing a GNSS measurement in the connected state, and the second sending module 903 is configured to not send second information, where the second information includes at least one of: a GNSS measurement trigger instruction or second configuration information, where the second configuration information is used to instruct the terminal to perform an autonomous GNSS measurement.

It should be noted that for the specific implementation processes of the second receiving module 901, the processing module 902, and the second sending module 903 reference can be made to the detailed descriptions in the embodiments of FIG. 4 to FIG. 7. For the sake of brevity of the description, they are not repeated here.

The second receiving module 901 mentioned in this embodiment may be a receiving interface, a receiving circuit, or a receiver, etc.; the second sending module 903 may be a sending interface, a sending circuit, or a transmitter, etc.; the processing module 902 may be one or more processors.

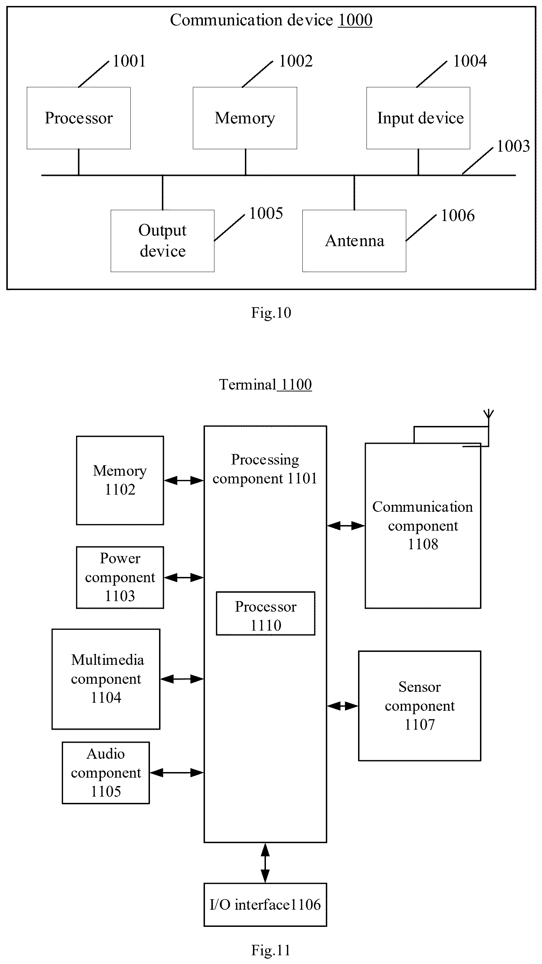

Based on the same concept, an embodiment of the present disclosure provides a communication device. The communication device may be the terminal or network device described in one or more of the above embodiments. FIG. 10 is a schematic structural diagram of a communication device according to an embodiment of the present disclosure. As shown in FIG. 10, the communication device 1000 adopts general computer hardware, including a processor 1001, a memory 1002, a bus 1003, an input device 1004, and an output device 1005.

In some possible implementations, the memory 1002 may include computer storage media in the form of volatile and/or non-volatile memory, such as read-only memory and/or random access memory. The memory 1002 may store an operating system, application programs, other program modules, executable code, program data, user data, etc.

The input device 1004 may be used to input commands and information to the communication device. The input device 1004 may be a keyboard or a pointing device, such as a mouse, trackball, touchpad, microphone, joystick, game pad, satellite dish, scanner, or similar device. These input devices may be connected to the processor 1001 through the bus 1003.

The output device 1005 may be used to output information from the communication device. In addition to a monitor, the output device 1005 may also be other peripheral output devices, such as speakers and/or printing devices. These output devices may also be connected to the processor 1001 through the bus 1003.

The communication device may be connected to a network through an antenna 1006, for example, connected to a local area network (LAN). In a networked environment, computer-executable instructions stored in the control device may be stored in a remote storage device, and are not limited to local storage.

When the processor 1001 in the communication device executes the executable code or application programs stored in the memory 1002, the communication device performs the communication method on the terminal side or the network device side in the above embodiments. For the specific execution process reference is made to the above embodiments and details will not be repeated here.

In addition, the memory 1002 stores computer-executable instructions for implementing the functions of the first sending module 801 and the first receiving module 802 in FIG. 8. The functions/implementation processes of the first sending module 801 and the first receiving module 802 in FIG. 8 can all be implemented by the processor 1001 in FIG. 10 calling the computer-executable instructions stored in the memory 1002. For the specific implementation processes and functions reference is made to the above related embodiments.

Alternatively, the memory 1002 stores computer-executable instructions for implementing the functions of the second receiving module 901, the processing module 902, and the second sending module 903 in FIG. 9. The functions/implementation processes of the second receiving module 901, the processing module 902, and the second sending module 903 in FIG. 9 can all be implemented by the processor 1001 in FIG. 10 calling the computer-executable instructions stored in the memory 1002. For the specific implementation processes and functions reference is made to the above related embodiments.

Based on the same inventive concept, an embodiment of the present disclosure provides a terminal. The terminal is consistent with the terminal in one or more of the above embodiments. Optionally, the terminal may be a mobile phone, computer, digital broadcast terminal, messaging device, game console, tablet device, medical device, fitness device, personal digital assistant, etc.

FIG. 11 is a schematic structural diagram of a terminal according to an embodiment of the present disclosure. As shown in FIG. 11, the terminal 1100 may include one or more of the following components: a processing component 1101, a memory 1102, a power component 1103, a multimedia component 1104, an audio component 1105, an input/output (I/O) interface 1106, a sensor component 1107, and a communication component 1108.

The processing component 1101 typically controls overall operations of the terminal 1100, such as the operations associated with display, telephone calls, data communications, camera operations, and recording operations. The processing component 1101 may include one or more processors 1110 to execute instructions to perform all or part of the steps of the above method. Moreover, the processing component 1101 may include one or more modules which facilitate the interaction between the processing component 1101 and other components. For instance, the processing component 1101 may include a multimedia module to facilitate the interaction between the multimedia component 1104 and the processing component 1101.

The memory 1102 is configured to store various types of data to support the operation of the terminal 1100. Examples of such data include instructions for any application or method operated on the terminal 1100, contact data, phonebook data, messages, pictures, videos, etc. The memory 1102 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 1103 provides power to various components of the terminal 1100. The power component 1103 may include a power management system, one or more power sources, and any other components associated with the generation, management, and distribution of power in the terminal 1100.

The multimedia component 1104 includes a screen providing an output interface between the terminal 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe operation. In some embodiments, the multimedia component 1104 includes a front camera and/or a rear camera. The front camera and the rear camera may receive external multimedia data while the terminal 1100 is in an operation mode, such as a photographing mode or a video mode. Each of the front camera and the rear camera may be a fixed optical lens system or have focus and optical zoom capability.

The audio component 1105 is configured to output and/or input audio signals. For example, the audio component 1105 includes a microphone (MIC) configured to receive an external audio signal when the terminal 1100 is in an operation mode, such as a call mode, a recording mode, and a voice recognition mode. The received audio signal may be further stored in the memory 1102 or transmitted via the communication component 1108. In some embodiments, the audio component 1105 further includes a speaker to output audio signals.

The I/O interface 1106 provides an interface between the processing component 1101 and peripheral interface modules, such as a keyboard, a click wheel, buttons, and the like. The buttons may include, but are not limited to, a home button, a volume button, a starting button, and a locking button.

The sensor component 1107 includes one or more sensors to provide status assessments of various aspects of the terminal 1100. For instance, the sensor component 1107 may detect an open/closed status of the terminal 1100, relative positioning of components, e.g., the display and the keypad, of the terminal 1100, a change in position of the terminal 1100 or a component of the terminal 1100, a presence or absence of user contact with the terminal 1100, an orientation or an acceleration/deceleration of the terminal 1100, and a change in temperature of the terminal 1100. The sensor component 1107 may include a proximity sensor configured to detect the presence of nearby objects without any physical contact. The sensor component 1107 may also include a light sensor, such as a CMOS or CCD image sensor, for use in imaging applications. In some embodiments, the sensor component 1107 may also include an accelerometer sensor, a gyroscope sensor, a magnetic sensor, a pressure sensor, or a temperature sensor.

The communication component 1108 is configured to facilitate communication, wired or wirelessly, between the terminal 1100 and other devices. The terminal 1100 can access a wireless network based on a communication standard, such as Wi-Fi, 2G, or 3G, or a combination thereof. In one exemplary embodiment, the communication component 1108 receives a broadcast signal or broadcast associated information from an external broadcast management system via a broadcast channel. In one exemplary embodiment, the communication component 1108 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above method.

Based on the same concept, an embodiment of the present disclosure provides a network device. The network device is consistent with the network device in one or more of the above embodiments.

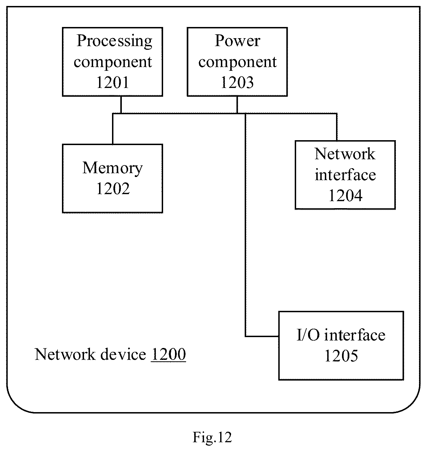

FIG. 12 is a schematic structural diagram of a network device according to an embodiment of the present disclosure. As shown in FIG. 12, the network device 1200 may include a processing component 1201, which further includes one or more processors, and a memory resource represented by a memory 1202, for storing instructions executable by the processing component 1201, such as application programs. The application programs stored in the memory 1202 may include one or more modules, each corresponding to a set of instructions. Furthermore, the processing component 1201 is configured to execute the instructions to perform any method applied to the network device described above.

The network device 1200 may also include a power component 1203 configured to perform power management of the network device 1200, a wired or wireless network interface 1204 configured to connect the network device 1200 to a network, and an input output (I/O) interface 1205. The network device 1200 may operate based on an operating system stored in the memory 1202, such as Windows Server TM, Mac OS XTM, UnixTM, LinuxTM, FreeBSDTM or the like.

Based on the same concept, an embodiment of the present disclosure also provides a computer-readable storage medium. The computer-readable storage medium stores instructions that, when run on a computer, are used to perform the communication method on the terminal side or the network device side in one or more of the above embodiments.

Based on the same concept, an embodiment of the present disclosure also provides a computer program or computer program product. When the computer program product is executed on a computer, the computer is caused to implement the communication method on the terminal side or the network device side in one or more of the above embodiments.

Those skilled in the art, after considering the specification and practicing the invention disclosed herein, will easily think of other implementations of the present disclosure. The embodiments of the present disclosure are intended to cover any variations, uses, or adaptive changes of the present disclosure. These variations, uses, or adaptive changes follow the general principles of the present disclosure and include common general knowledge or conventional technical means in the technical field not disclosed in the embodiments of the present disclosure. The specification and embodiments are to be regarded as illustrative only, and the true scope and spirit of the present disclosure are pointed out by the following claims.

It should be understood that the present disclosure is not limited to the precise structures that have been described above and shown in the drawings, and that various modifications and changes can be made without departing from the scope thereof. The scope of the present disclosure is limited only by the appended claims.

## Claims

1. A communication method, performed by a terminal, comprising:
indicating a capability of the terminal to perform a global navigation satellite system (GNSS) measurement in a connected state.

2. The method according to claim 1, wherein indicating the capability of the terminal to perform the GNSS measurement in the connected state comprises:
sending first information, wherein the first information is used to indicate the capability of the terminal to perform the GNSS measurement in the connected state.

3. The method according to claim 2, wherein the first information is capability indication information of the terminal, or the first information is GNSS measurement assistance information.

4. The method according to claim 2 or 3, wherein the first information is capability indication information of the terminal,
a value of the capability indication information of the terminal is a first value, and the capability indication information of the terminal is used to indicate that the terminal supports performing the GNSS measurement in the connected state; or
a value of the capability indication information of the terminal is a second value, and the capability indication information of the terminal is used to indicate that the terminal does not support performing the GNSS measurement in the connected state.

5. The method according to any one of claims 2 to 4, wherein the first information is the capability indication information of the terminal, and sending the first information comprises:
sending the capability indication information of the terminal before the terminal enters the connected state; or
sending the capability indication information of the terminal after the terminal enters the connected state.

6. The method according to any one of claims 2 to 5, wherein the terminal does not support performing the GNSS measurement in the connected state, the first information is the capability indication information of the terminal, and the method further comprises:
not receiving first configuration information sent by a network device, wherein the first configuration information is used to instruct the terminal to send GNSS measurement time information.

7. The method according to claim 2 or 3, wherein the first information is GNSS measurement assistance information, a value of the GNSS measurement assistance information is a preset value, and the GNSS measurement assistance information is used to indicate that the terminal does not support performing the GNSS measurement in the connected state.

8. The method according to claim 7, wherein the preset value is one of a plurality of optional values of the GNSS measurement assistance information, and the plurality of optional values at least comprise one preset value.

9. The method according to claim 1, wherein the terminal does not support performing the GNSS measurement in the connected state, and the method further comprises:
receiving first configuration information sent by a network device, wherein the first configuration information is used to instruct the terminal to send GNSS measurement time information; and
not sending the GNSS measurement time information.

10. The method according to any one of claims 1 to 9, wherein the terminal does not support performing the GNSS measurement in the connected state, and the method further comprises:
after the terminal enters the connected state, not receiving second information sent by a network device, wherein the second information comprises at least one of: a GNSS measurement trigger instruction or second configuration information, wherein the second configuration information is used to instruct the terminal to perform an autonomous GNSS measurement; or
not sending acknowledgement response information corresponding to the second information.

11. A communication method, performed by a network device, comprising:
obtaining a capability, indicated by a terminal, of the terminal to perform a global navigation satellite system (GNSS) measurement in a connected state.

12. The method according to claim 11, wherein obtaining the capability, indicated by the terminal, of the terminal to perform the GNSS measurement in the connected state comprises:
receiving first information sent by the terminal, wherein the first information is used to indicate the capability of the terminal to perform the GNSS measurement in the connected state.

13. The method according to claim 12, wherein the first information is capability indication information of the terminal; or the first information is GNSS measurement assistance information.

14. The method according to claim 12 or 13, wherein the first information is capability indication information of the terminal,
a value of the capability indication information of the terminal is a first value, and the capability indication information of the terminal is used to indicate that the terminal supports performing the GNSS measurement in the connected state; or
a value of the capability indication information of the terminal is a second value, and the capability indication information of the terminal is used to indicate that the terminal does not support performing the GNSS measurement in the connected state.

15. The method according to any one of claims 12 to 14, wherein the terminal does not support performing the GNSS measurement in the connected state, the first information is the capability indication information of the terminal, and the method further comprises:
not sending first configuration information, wherein the first configuration information is used to instruct the terminal to send GNSS measurement time information.

16. The method according to claim 12 or 13, wherein the first information is GNSS measurement assistance information, a value of the GNSS measurement assistance information is a preset value, and the GNSS measurement assistance information is used to indicate that the terminal does not support performing the GNSS measurement in the connected state.

17. The method according to claim 16, wherein the preset value is one of a plurality of optional values of the GNSS measurement assistance information, and the plurality of optional values at least comprise one preset value.

18. The method according to claim 11, wherein obtaining the capability, indicated by the terminal, of the terminal to perform the GNSS measurement in the connected state comprises:
sending first configuration information, wherein the first configuration information is used to instruct the terminal to send GNSS measurement time information; and
performing one of:
in a case where the GNSS measurement time information is received, determining that the terminal supports performing the GNSS measurement in the connected state; or
in a case where the GNSS measurement time information is not received, determining that the terminal does not support performing the GNSS measurement in the connected state.

19. The method according to any one of claims 11 to 18, wherein the terminal does not support performing the GNSS measurement in the connected state, and the method further comprises:
not sending second information, wherein the second information comprises at least one of: a GNSS measurement trigger instruction or second configuration information, wherein the second configuration information is used to instruct the terminal to perform an autonomous GNSS measurement.

20. A communication method, performed by a communication system, comprising:
indicating, by a terminal, a capability of the terminal to perform a global navigation satellite system (GNSS) measurement in a connected state to a network device; and
determining, by the network device, that the terminal does not support performing the GNSS measurement in the connected state, and performing at least one of:
not sending first configuration information, wherein the first configuration information is used to instruct the terminal to send GNSS measurement time information; or
not sending second information, wherein the second information comprises at least one of: a GNSS measurement trigger instruction or second configuration information, wherein the second configuration information is used to instruct the terminal to perform an autonomous GNSS measurement.

21. A communication apparatus, comprising:
a sending module configured to indicate a capability of the terminal to perform a global navigation satellite system (GNSS) measurement in a connected state.

22. A communication apparatus, comprising:
a receiving module configured to obtain a capability, indicated by a terminal, of the terminal to perform a global navigation satellite system (GNSS) measurement in a connected state.

23. A communication device, comprising:
one or more processors;
one or more memories used to store instructions;
wherein the one or more processors are configured to invoke the instructions to cause the communication device to perform the communication method according to any one of claims 1 to 10 or 11 to 19.

24. A communication system, comprising: a terminal and a network device, wherein
the terminal is configured to perform the communication method according to any one of claims 1 to 10; and
the network device is configured to perform the communication method according to any one of claims 11 to 19.

25. A computer-readable storage medium, having stored therein instructions that, when run on a communication device, causes the communication device to perform the communication method according to any one of claims 1 to 10 or 11 to 19.
